# EUROPÄISCHE PATENTSCHRIFT

(11) **EP 2 200 471 B1**
(45) Veröffentlichungstag und Bekanntmachung des Hinweises auf die Patenterteilung: **06.04.2011**
(21) Anmeldenummer: 08804541.4
(22) Anmeldetag: 22.09.2008
(51) Int. Cl.: A44B 11/12

(54) **KLEMMSCHLOSS FÜR EIN SPANNMITTEL**
CLAMPING LOCK FOR A TENSIONING MEANS
FERMETURE À SERRAGE POUR UNE SANGLE

(30) Priorität: 20.09.2007 DE 102007045170
(43) Veröffentlichungstag der Anmeldung: 30.06.2010
(73) Patentinhaber: Spanset Inter AG, 8830 Wollerau (CH)
(72) Erfinder: MAMIÉ, André, CH-8807 Freienbach (CH)
(74) Vertreter: Cohausz & Florack
(86) Internationale Anmeldenummer: PCT/EP2008/062615
(87) Internationale Veröffentlichungsnummer: WO 2009/040326

(56) Entgegenhaltungen:
- EP-A- 0 439 053
- WO-A-00/30487
- WO-A-87/02552
- GB-A- 678 069
- US-A- 4 373 234

## Beschreibung

Die Erfindung betrifft ein Klemmschloss für ein Spannmittel, das ein Gehäuse und ein in dem Gehäuse gelagertes Kammelement umfasst. Das Gehäuse umfasst dabei zwei beabstandet zueinander angeordnete Wangenteile, einen sich zwischen den Wangenteilen erstreckenden Anschlagsteg mit einer Anschlagfläche und eine sich ebenfalls zwischen den Wangenteilen erstreckende Schwenkachse. Das Kammelement ist schwenkbar auf der Schwenkachse des Gehäuses gelagert und weist einen der Anschlagfläche des Anschlagsteges zugeordneten Umfangsflächenabschnitt auf, der mit der Anschlagfläche des Anschlagsteges einen Klemmschlitz zum Durchführen des Spannmittels derart begrenzt, dass die im praktischen Einsatz im Spannmittel wirkenden Zugkräfte das Kammelement in den Klemmspalt hineinziehen. Solche jeweils aus Kunststoff bestehende Klemmschlösser sind beispielsweise aus der WO 87/02552 oder der US 4,373,234 bekannt.

Klemmschlösser der hier in Rede stehenden Art werden eingesetzt, um die Länge des jeweiligen Spannmittels an die jeweilige Befestigungsaufgabe unter Aufrechterhaltung der jeweils erforderlichen Spannkräfte anzupassen. Dabei werden die Klemmschlösser typischerweise in Kombination mit in Form von Gurten, Bändern oder Seilen vorliegenden Spannmittel eingesetzt, die ausreichend biegsam sind und gleichzeitig in der Lage sind, die jeweils geforderten Spannkräfte zu übertragen.

Bekannte Klemmschlösser, wie sie beispielsweise in der WO 00/30487 beschrieben sind, weisen in der Regel ein Gehäuse und ein exzentrisch schwenkbeweglich in dem Gehäuse gelagertes Kammelement auf. Gleichzeitig ist bei den bekannten Klemmschlössern in der Regel ein Anschlagelement vorhanden, das so angeordnet ist, dass zwischen einer in Richtung des Kammelements nach außen gewölbten Anschlagfläche des Anschlagelements und der nach außen gewölbten Umfangsfläche des Kammelements ein Klemmschlitz ausgebildet ist, dessen lichte Weite von der Schwenkstellung des Kammelements bestimmt wird. Die Anordnung der Schwenkachse des Kammelements und der Anschlagfläche des Anschlagelements sind dabei so gewählt, dass sich der Klemmschlitz bei entgegen der Einführrichtung des Spannelements erfolgender Verschwenkung des Kammelements verengt. Auf diese Weise lässt sich das Spannelement bei weit geöffnetem Klemmschlitz im Wesentlichen kraftfrei in den Klemmschlitz einführen. Sobald danach die erforderliche Spannung im Spannmittel erreicht ist, übt das Spannmittel eine hohe Normalkraft auf die Umfangsfläche des Kammelements aus. Nachdem das durch das Klemmschloss geführte freie Ende von der Spannkraft entlastet ist, nimmt das Spannelement das Kammelement in Folge dieser Kraft und der zwischen Kammelement und Spannmittel wirkenden Reibung entgegen der Einführrichtung mit, so dass die Weite des Klemmschlitzes minimiert und das Spannmittel zwischen der Umfangsfläche des Kammelements und der Anschlagfläche des Anschlagelements eingeklemmt wird. Aufgrund der in dem Spannmittel im gespannten Zustand herrschenden Reaktionskräfte wird diese Klemmung aufrechterhalten, bis das Kammelement durch eine von außen wirkende Kraft in Einführrichtung verschwenkt und so die Weite des Klemmschlitzes wieder erweitert wird.

Problematisch bei den bekannten Klemmschlössern ist einerseits, dass die im Klemmschlitz herrschende Klemmkraft abhängig ist von der zwischen dem Kammelement und dem Spannmittel herrschenden Reibung. Andererseits erweist es sich bei den bekannten Klemmschlössern in der Praxis insbesondere bei Spannbefestigungen, bei denen hohe Spannkräfte erforderlich sind, oft schwierig, das Kammelement aus seiner Klemmstellung zu lösen, um das Spannmittel wieder freizugeben.

Bei einer ebenfalls in der WO 00/30487 angegebenen Variante eines Klemmschlosses ist versucht worden, diese Problematik dadurch zu beseitigen, dass am in Einführrichtung des Spannmittels hinteren Ende der der Anschlagfläche des Anschlagelements zugeordneten ersten nach außen gewölbten Umfangsflächenabschnitt des Kammelements eine Kante ausgebildet ist, um die herum ein Spannelement geführt wird. Der sich an die Kante in Einführrichtung anschließende Umfangsflächenabschnitt ist dabei abgeflacht ausgebildet, so dass das Spannelement in einem geknickten Verlauf um die Kante geführt ist. An seinem der Kante gegenüberliegenden Ende geht der abgeflachte Umfangsflächenabschnitt in einen zweiten nach außen gewölbten Umfangsflächenabschnitt über, der dem ersten nach außen gewölbten Umfangsflächenabschnitt des Kammelements gegenüberliegt.

Auch diesem zweiten Umfangsflächenabschnitt ist eine an einem weiteren entsprechend ausgebildeten Gehäusesteg des bekannten Klemmschlosses ausgebildete Anschlagfläche zugeordnet. Auf diese Weise wird eine doppelte Klemmung des Spannmittels in der Spannstellung erreicht, wobei die Klemmkräfte aufgrund der Umlenkung des Spannmittels um die Kante zwischen dem ersten nach außen gewölbten Umfangsabschnitt und dem abgeflachten Umfangsabschnitt besonders hoch sind. Nachteilig ist dabei allerdings, dass das Einfädeln des Spannmittels in das Klemmschloss so umständlich ist, dass es unter den beispielsweise in der Praxis eines Transportunternehmens vorherrschenden rauen Bedingungen kaum handhabbar ist.

Letzteres gilt insbesondere auch deshalb, weil bei dem bekannten Klemmschloss an das Kammelement zusätzlich ein Hebel angeformt sein kann, über den das Kammelement aus einer Klemm- in eine Lösestellung geschwenkt werden kann. Damit mit ihm ausreichend große Kräfte übertragen werden können, erstreckt sich dieser Hebel über die Breite des Kammelements. Um dennoch das Spannmittel durch das Klemmschloss führen zu können, ist in den Hebel eine Öffnung eingeformt, durch die das Spannelement auf seinem Weg durch das Klemmschloss zusätzlich geführt werden muss.

Ein anders gestaltetes und wirkendes Klemmschloss ist aus der EP 0 439 053 A1 bekannt. Es umfasst ein Gehäuse, das einen Stegteil mit Querholmen und zwei an die Längsseiten des Stegteils angeformte Wangen besitzt. Dabei ist das Stegteil durch einen in das Stegteil eingelegten und mit Kunststoff des Gehäuses umspritzten Einlegerahmen armiert, der im praktischen Einsatz die Spannkräfte aufnimmt, die von dem mit den Querholmen jeweils verkoppelten Spannmittel übertragen werden. Jedoch unterscheidet sich dieses bekannte Klemmschloss von Klemmschlössern der hier in Rede stehenden Gattung zum einen dadurch, dass bei dem aus der EP 0 439 053 A1 bekannten Klemmschloss ein Deckel in nicht näher beschriebener Weise zwischen den Wangen des Gehäuses gelagert ist, ohne dass dazu eine sich zwischen den Wangen des Gehäuses erstreckende, bei dem gattungsgemäßen Schloss vorgesehene Schwenkachse vorgesehen ist. Zudem sind bei dem aus der EP 0 439 053 A1 bekannten Schloss der eine mit einem Anschlagsteg vergleichbare Querholm und der ihm zugeordnete Umfangsflächenabschnitt des am Deckel ausgebildeten Stegs so zueinander ausgerichtet, dass der Steg im Einsatz von oben auf den Querholm durch die auf ihm lastenden, von dem Spannmittel ausgeübten Kräfte gedrückt wird. Das Schwenklager des Deckels bleibt auf diese Weise praktisch kraftfrei. Um das Andrücken des Deckels gegen den als Anschlagsteg dienenden Querholm zu bewerkstelligen, muss jedoch das Spannmittel zunächst um den Steg des Deckels gelegt, anschließend um den Querholm durch einen im Gehäuse zwischen der Stirnseite des Deckels und einem weiteren Holm ausgebildeten Schlitz geführt und dann auch noch durch einen weiteren im Deckel gebildeten Schlitz geleitet werden.

Um die Sicherheit zu erhöhen, mit der das Spannmittel das Kammelement in den Klemmspalt hineinzieht, ist es des Weiteren bekannt, an die mit dem Spannmittel in Berührung kommende Umfangsfläche des Kammelements Rastvorsprünge anzuformen. Diese greifen in das im gespannten Zustand stramm am Klemmelement anliegende Spannmittel, so dass nicht nur eine reib-, sondern auch eine formschlüssige Verbindung zwischen Spannmittel und Kammelement hergestellt ist (US 2004/0163216 A1).

Eine alleine auf einen Formschluss zwischen dem zu haltenden Spannmittel und an einem Verschlussdeckel ausgebildeten Rastvorsprüngen basierende Ausgestaltung eines Klemmschlosses ist aus der US 2003/0041420 A1 bekannt. Dieses Klemmschloss weist ein aus Stahl oder einem vergleichbar festem Material bestehendes, im Querschnitt U-förmiges Gehäuse auf. In dem Gehäuse ist ein Anschlagsteg in Nuten verschiebbar gelagert ist, die in die Wangen des Gehäuses eingeformt sind. Der Anschlagsteg weist eine zylindrische Gestalt mit einer an seiner Umfangsfläche entsprechend gewölbten Anschlagfläche für einen Deckel auf, der mit seiner einen Schmalseite um eine parallel zum Anschlagsteg ausgerichtete Schwenkachse verschwenkbar gelagert ist. Im Bereich seiner dem Anschlagsteg zugeordneten Unterseite sind an dem Deckel Rastvorsprünge ausgebildet. Diese sind in Bezug auf die Umfangsfläche des Anschlagstegs jeweils so ausgerichtet, dass sie im Wesentlichen lotgerecht zur Anschlagfläche ausgerichtet sind. In Folge dessen graben sich die Rastvorsprünge bei geschlossenem Deckel aus einer senkrecht zur Anlagefläche gerichteten Richtung in das Gewebe des Spannmittels, um auf diese Weise die Lage des Spannmittels im Klemmspalt zu fixieren. Um einerseits sicherzustellen, dass der Deckel mit der erforderlichen Druckkraft gegen das Spannmittel gedrückt wird und um andererseits zu verhindern, dass sich der Deckel und damit einhergehend der Halt des Spannmittels unbeabsichtigt löst, ist im Bereich seiner der Schwenkachse gegenüberliegenden freien Schmalseite an den Längsseiten des Deckels jeweils ein seitlich in Richtung der Wangen des Gehäuses vorstehender Vorsprung ausgebildet. In an den Anschlagsteg angeschwenkter Schließstellung rasten diese Vorsprünge formschlüssig in jeweils eine Ausnehmung ein, die an den der betreffenden Schmalseite des Deckels zugeordneten Rand der jeweiligen Wange eingeformt ist. Die auf diese Weise hergestellte formschlüssige Verbindung soll derart fest sein, dass sie nur mit Hilfe eines zusätzlichen Werkzeugs wieder gelöst werden kann. In Folge dessen ist ein Nachspannen des bekannten Schlosses umständlich. Darüber hinaus besteht das Problem, dass sich das Schloss bei einer im Spannmittel herrschenden Überlast plötzlich öffnet oder das Spannmittel durch die in das Spannmittel greifenden Rastvorsprünge zerstört wird.

Neben der umständlichen Handhabung besteht ein weiterer Nachteil der bekannten Klemmschlösser darin, dass sie aufgrund der Vielzahl der für ihre Montage erforderlichen Bauelemente technisch aufwändig und in der Herstellung dementsprechend teuer sind.

Ein durch eine Reduzierung der Anzahl der für seine Herstellung benötigten Bauteile kostengünstiger erzeugbares Klemmschloss ist aus der EP 0 841 020 A1 bekannt. Bei diesem bekannten Klemmschloss ist ein einstückig aus Kunststoff gefertigtes Gehäuse vorgesehen, in dem ein separat vorgefertigtes, ebenfalls aus Kunststoff bestehendes Kammelement schwenkbar gelagert ist. Das Gehäuse weist zwei parallel zueinander mit Abstand angeordnete, längliche Wangen auf. Im Bereich ihres einen Endes erstreckt sich zwischen den Wangen ein Anschlagsteg, um das das jeweils hinsichtlich seiner wirksamen Länge zu verstellende Band lose geführt ist, während sich im Bereich ihres anderen Endes zwischen den Wangen ein ebenfalls stegartiger Befestigungsabschnitt erstreckt. Der Anschlagsteg ist dabei von einer koaxial zu seiner Längsachse ausgerichteten Durchgangsöffnung durchzogen, in deren Eingangsöffnungen jeweils ein Zapfen eines schwenkbar an dem Anschlagsteg gelagerten Bügels greift.

Zum schwenkbaren Lagern des Kammelements ist bei dem aus der EP 0 841 020 A1 bekannten Klemmschloss in dem Kunststoffgehäuse eine getrennt vorgefertigte Achse vorhanden, die durch zwei koaxial zueinander und achsparallel zur Längsachse des Anschlagstegs ausgerichtete, gegenüberliegend zueinander angeordnete Öffnungen der Wangen gesteckt ist. Gleichzeitig ist die Achse durch eine entsprechende Durchgangsöffnung am einen Endabschnitt des Kammelements geführt.

Nachteilig bei der aus der EP 0 841 020 A1 bekannten Gestaltung eines Klemmschlosses ist, dass die für das Kammelement erforderliche Schwenkachse als separates Bauteil in das Gehäuse eingesetzt werden muss. Dies bedingt nicht nur einen relativ kleinen Durchmesser der Achse, sondern macht auch die Verwendung eines Materials für die Achse erforderlich, das in der Lage ist, die im praktischen Gebrauch auftretenden Kräfte zu ertragen. Darüber hinaus erfordert das gleichzeitige Einschieben der Achse durch die ihr zugeordneten Öffnungen des Gehäuses und die Öffnung des Kammelements einen zusätzlichen Arbeitsgang, der mit hoher Präzision durchgeführt werden muss.

Aus der GB 678,069 ist schließlich ein Klemmschloss bekannt, das ebenfalls ein einstückig aus einem nicht näher bestimmten Material gefertigtes Gehäuse und ein schwenkbar in dem Gehäuse gelagertes Kammelement umfasst. Das Gehäuse weist ebenfalls zwei seitliche Wangen auf, zwischen deren einen Enden sich ein Befestigungsabschnitt für die Befestigung des einen Endes des jeweils hinsichtlich seiner effektiven Länge zu verstellenden Bandes erstreckt, während zwischen den anderen Enden der Wangen ein Anschlagsteg ausgebildet ist, über den das Band geführt ist und gegen das ein schwenkbar in dem Gehäuse gelagertes Kammelement wirkt. Das Kammelement ist dabei auf zwei nach innen in den vom Gehäuse umgrenzten Raum vorstehenden kurzen Zapfen schwenkbar gelagert, die in entsprechende Öffnungen des Kammelements greifen. Im entspannten, unverformten Zustand entspricht die Breite des Kammelements bis auf ein geringes Untermaß der lichten Weite zwischen den Wangen des Gehäuses.

Voraussetzung für die Montierbarkeit und Funktion des aus der GB 678,069 bekannten Klemmschlosses ist demnach, dass das Kammelement quer zu seiner Schwenkachse so weit flexibel ist, dass seine Öffnungen mit dem ihnen jeweils zugeordneten Zapfen des Gehäuses durch eine entsprechende elastische Verformung von Kammelement oder Gehäuse in Eingriff gebracht werden können. Ebenso soll es durch eine ausreichende Nachgiebigkeit des Kammelements möglich sein, das bekannte Klemmschloss an unterschiedlich dicken Bändern zu nutzen. Diese somit notwendig vorhandene Verformbarkeit birgt die Gefahr, dass bei hohen Belastungen keine ausreichende Klemmung des Bandes mehr gewährleistet ist.

Vor dem Hintergrund des voranstehend erläuterten Standes der Technik bestand die Aufgabe der Erfindung darin, ein Klemmschloss zu schaffen, das eine hohe Funktionssicherheit sowie eine kompakte, gut handhabbare Bauform besitzt und sich gleichzeitig einfach herstellen lässt.

Diese Aufgabe ist erfindungsgemäß durch ein Klemmschloss mit den in Anspruch 1 angegebenen Merkmalen gelöst worden. In den von Anspruch 1 abhängigen Ansprüchen sind vorteilhafte Ausgestaltungen eines solchen erfindungsgemäßen Klemmschlosses angegeben.

Die Erfindung geht von der Feststellung aus, dass es für eine ausreichend hohe Belastbarkeit erforderlich ist, das Gehäuse im Bereich der Schwenkachse für das Kammelement, des Anschlags und / oder eines gegebenenfalls zusätzlich vorhandenen Befestigungsabschnitts durch ein in einen Kunststoffmantel eingelegtes, aus einem festeren Werkstoff bestehendes Verstärkungselement zu verstärken.

Dies wird erfindungsgemäß dadurch bewerkstelligt, dass beim Gehäuse eines erfindungsgemäßen Klemmschlosses mindestens im Bereich der Wangenteile, des Anschlagsteges und der Schwenkachse des Gehäuses eine Verstärkungseinlage vorhanden ist, die von einem Kunststoffmantel umgeben ist und aus einem Material besteht, das fester ist als das Material des Kunststoffmantels.

Zusätzlich kann das Gehäuse einen Befestigungsabschnitt aufweisen. Dieser Befestigungsabschnitt kann zur allgemeinen Befestigung des Klemmschlosses oder zum Anschließen des Endes eines Spannmittels genutzt werden. Letzteres ist beispielsweise dann sinnvoll, wenn über das Klemmschloss zwei Spannmittel aneinander angeschlossen sind oder das Spannmittel eine Schlaufe bildet, deren Enden durch das Klemmschloss miteinander verbunden sind. Um einen möglichst einfachen Anschluss zu ermöglichen, ist es gerade dann, wenn mit dem Klemmschloss zwei Enden von Spannmitteln verbunden sind, günstig, wenn der Befestigungsabschnitt stegförmig und sich parallel zum Anschlagsteg erstreckend ausgebildet ist.

Die im Gehäuse eines erfindungsgemäßen Klemmschlosses vorhandene Verstärkungseinlage kann beispielsweise nach Art eines Rahmens mit mehreren stegartigen Abschnitten ausgebildet sein. Dabei kann die Verstärkungseinlage jeweils Abschnitte aufweisen, die nicht nur die Schwenkachse des Kammelements, sondern auch den Anschlagsteg sowie den gegebenenfalls vorhandenen Befestigungsabschnitt verstärken. Ein solches Verstärkungselement kann beispielsweise durch ein Metallstanzteil gebildet oder aus einem anderen vergleichbar kostengünstigen und einfach verarbeitbaren festen Material hergestellt sein. Ebenso ist es denkbar, mehrere jeweils rahmenförmige Stanzteile zu dem Verstärkungsteil zusammenzusetzen, wenn dies aus fertigungstechnischer Sicht günstiger ist.

Ein erfindungsgemäßes Klemmschloss lässt sich dadurch auf besonders kostengünstige Weise herstellen, dass an sein Gehäuse der Anschlagsteg und die Schwenkachse des Kammelements in einem Stück angeformt sind. Durch diese Ausgestaltung kann das Gehäuse als ein separates, in sich geschlossenes und als solches einstückiges Bauteil fertig vorgefertigt werden, wobei an dem erhaltenen Bauteil dann bereits mindestens der Anschlagsteg und die Schwenkachse des Kammelements fertig vorhanden sind. Sofern ein Befestigungsabschnitt vorhanden ist, kann auch dieser einstückig mit dem Gehäuse verbunden sein.

Die Befestigung des Kammelements auf der Schwenkachse des erfindungsgemäß gestalteten Gehäuses kann auf einfache Weise dadurch erfolgen, dass in das Klemmelement eine Lageröffnung eingeformt ist, die im Querschnitt betrachtet eine einen mehr als 180° betragenden Winkel umgreifende, kreisbogenförmig eingewölbte Innenumfangsfläche aufweist.

Im Fall, dass das Gehäuse des erfindungsgemäßen Klemmschlosses einstückig ausgebildet wird, lässt sich die einfache Montage des Kammelements auf seiner Schwenkachse dabei dadurch ermöglichen, dass die Lageröffnung des Kammelements als Schlitzöffnung ausgebildet und ihr Wölbungsradius so an den Durchmesser der Schwenkachse angepasst ist, dass das Kammelement unter Wirkung einer Klemmkraft schwenkbeweglich auf der Schwenkachse sitzt. Die Pressung zwischen den Außenflächen der Schwenkachse und den Innenflächen der Ausnehmung kann dabei problemlos so ausgelegt werden, dass das Kammelement unter Wirkung der Klemmkraft spielfrei auf der Schwenkachse sitzt.

Eine andere auch unter ungünstigen Einsatzbedingungen besonders sicher funktionierende, gleichzeitig aber ebenfalls einfach herzustellende Ausgestaltung der Erfindung ist dadurch gekennzeichnet, dass das Gehäuse aus zwei Gehäuseteilen zusammengesetzt ist und dass die Teilungsebene des Gehäuses die Längsachse von Anschlagsteg und Schwenkachse jeweils unter einem Winkel, der größer als 0° ist, schneidet. Die Aufteilung des Gehäuses in zwei Teile erlaubt es, ein Kammelement zu verwenden, bei dem die Lageröffnung in radialer Richtung vollständig umschlossen ist von Material des Kammelements. Beim Zusammenbau des Gehäuses wird die Schwenkachse des Gehäuses in die Lageröffnung des Kammelements gesteckt.

Liegt die Teilungsebene im Bereich der Schwenkachse unmittelbar an dem einen Wangenteil des Gehäuses an, so steht die Schwenkachse im vorproduzierten, noch nicht zusammengefügten Zustand des Gehäuses zapfenartig von dem anderen Wangenteil ab. Genauso kann die Teilungsebene jedoch auch an jeder anderen zwischen den Wangenteilen vorhandenen Stelle die Schwenkachse schneiden. In diesem Fall steht im vorgefertigten, noch nicht zusammengefügten Zustand des Gehäuses jeweils ein Abschnitt der Schwenkachse zapfenförmig von dem Wangenteil ab, das dem jeweiligen Gehäuseteil zugeordnet ist. Eine besonders einfache Gestaltung der Gehäuseteile bei gleichzeitig optimaler Funktion ergibt sich dabei dann, wenn die Teilungsebene des Gehäuses in der Mitte zwischen den Wangenteilen verläuft. Bevorzugt ist die Teilungsebene normal zur Längsachse der Schwenkachse, des Anschlagsteges und des Befestigungsabschnitts ausgerichtet, um ein einfaches Fügen der Gehäuseteile zu ermöglichen.

Im Fall des zweiteiligen Gehäuses sollte die Verbindung zwischen den Gehäuseteilen nach dem Zusammenfügen unlösbar sein, um ein ungewolltes Auseinanderfallen des Klemmschlosses zu vermeiden. Zu diesem Zweck können die Gehäuseteile miteinander beispielsweise durch Verkleben oder Verschweißen stoffschlüssig, sowie form- und/oder kraftschlüssig verbunden sein.

Fertigungstechnisch einfach herstellen lässt sich das Gehäuse eines erfindungsgemäßen Klemmschlosses dadurch, dass der Kunststoffmantel an die Verstärkungseinlage angespritzt ist.

Die Gebrauchseigenschaften eines erfindungsgemäßen Klemmschlosses können dadurch weiter verbessert werden, dass in das Kammelement eine Aufnahme eingeformt ist, in der eine Feder sitzt, die das Kammelement gegen mindestens eines der Wangenteile federnd elastisch so abstützt, dass die Feder das Kammelement selbsttätig in Richtung des Anschlagstegs verschwenkt. Auf diese Weise ist sichergestellt, dass sich das Kammelement unter der federnd elastischen Kraft der in ihm sitzenden Feder jeweils selbsttätig in die für seine Funktion richtige Stellung bewegt.

Um den Gebrauchswert eines erfindungsgemäßen Klemmschlosses für ein Spannmittel zu optimieren, weist bei einem erfindungsgemäßen Klemmschloss der Anschlagsteg eine geformte, insbesondere gewölbte Anschlagfläche auf. Gleichzeitig besitzt das um die Schwenkachse schwenkbar gelagerte Kammelement einen der Anschlagfläche des Anschlagsteges zugeordneten Umfangsflächenabschnitt auf, wobei ein von der Anschlagfläche des Anschlagsteges und dem Umfangsflächenabschnitt des Kammelements an gegenüberliegenden Seiten begrenzter Klemmschlitz zum Durchführen des Spannmittels vorhanden ist. Erfindungsgemäß ist der der Anschlagfläche des Anschlagstegs zugeordnete Umfangsflächenabschnitt des Kammelements in umgekehrter Weise wie die Anschlagfläche des Anschlagsteges geformt.

Wie beim Stand der Technik beruht auch die Funktion des erfindungsgemäßen Klemmschlosses darauf, dass das Kammelement aufgrund der im Spannmittel wirkenden Zugkräfte in den Klemmspalt hineingezogen wird, der Klemmspalt einhergehend mit der Bewegung des Kammelements also verengt und eine dementsprechend hohe Klemmkraft auf die an dem Kammelement und dem Anschlagsteg anliegenden Flächen des Spannmittels ausgeübt werden.

Bei einem erfindungsgemäßen Klemmschloss sind jedoch die den Klemmschlitz begrenzenden Flächenabschnitte so ausgebildet, dass das durch den Klemmschlitz geführte Spannmittel im gespannten Zustand flächig sowohl an der Umfangsfläche des Kammelements als auch an der Anschlagfläche des Anschlagstegs anliegt. Anders als bei den bekannten Klemmschlössern, bei denen die Klemmung des jeweiligen Spannmittels stets auf einen möglichst eng begrenzten, annähernd linienförmigen Bereich beschränkt ist, wird bei einem erfindungsgemäßen Klemmschloss das Spannmittel im gespannten Zustand somit gezielt zwischen zwei größeren Flächenabschnitten gepresst.

Auf diese Weise wird eine größere Druckfläche zwischen Spannmittel und Anschlagsteg bzw. Kammelement erhalten mit der Folge, dass die Klemmkräfte nicht nur in einem lokal eng begrenzten Bereich auf das Kammelement wirken. Stattdessen ist das Kammelement bei einem erfindungsgemäßen Klemmschloss über eine größere Fläche belastet, so dass lokal eng begrenzt auftretende, Brüche oder Risse induzierende Belastungsspitzen vermieden werden. Falls es zu einer Beanspruchung des erfindungsgemäßen Klemmschlosses über dessen maximal zugelassene Belastbarkeit hinaus kommen sollte, führt auch dies bei erfindungsgemäßer Ausgestaltung eines Klemmschlosses nicht zum Bruch. Dies wird dadurch erreicht, dass das Spannmittel das Kammelement mit zunehmender Spannkraft nicht immer tiefer in den Klemmschlitz hineinzieht, sondern dass das Kammelement so großflächig gegen den Klemmschlitz abgestützt ist, dass ab Erreichen einer bestimmten Klemmstellung keine weitere Steigerung der Klemmkräfte mehr möglich ist. Bei einem erfindungsgemäßen Klemmschloss beginnt das Spannmittel daher bei Überschreiten einer bestimmten maximal zulässigen Belastung von Kammelement und Anschlagsteg durch den Klemmschlitz zu gleiten. Dieser Vorgang stellt für den Benutzer einen eindeutigen Hinweis dar. Dieser Hinweis schützt den Benutzer davor, das Klemmschloss so stark zu belasten, dass es plötzlich und unvorhergesehen mit unter Umständen katastrophalen Folgen bricht.

Überraschend hat sich gezeigt, dass bei erfindungsgemäßer Gestaltung des Klemmschlosses die Sicherheit, mit der das Spannmittel im gespannten Zustand im Klemmschlitz gehalten wird, gegenüber den bekannten Klemmschlössern nicht nur verbessert, sondern sich ein erfindungsgemäßes Klemmschloss auch besonders einfach handhaben lässt. So ist es bei einem erfindungsgemäßen Klemmschloss nicht erforderlich, das Spannmittel umständlich einzufädeln, um die geforderten Haltekräfte zu bewerkstelligen. Da durch die erfindungsgemäße Formgebung von Kammelement und Anschlagsteg die Gefahr des unbeabsichtigten Verklemmens des schwenkbeweglichen Kammelements ebenfalls auf ein Minimum reduziert ist, ist stets sichergestellt, dass das erfindungsgemäße Klemmschloss auf einfache Weise geöffnet werden kann.

Die erfindungsgemäß genutzte Wirkung der einander zugeordneten, zueinander korrespondierend geformten Flächen von Anschlagsteg und Kammelement lässt sich grundsätzlich auch dann nutzen, wenn die Anschlagfläche des Anschlagsteges nach innen und die ihr zugeordnete Umfangsfläche des Kammelements nach außen gewölbt ist. Diese Ausgestaltung setzt jedoch unter Umständen eine Führung des Spannmittels voraus, die sich unter bestimmten Gegebenheiten in der Praxis als unpraktisch herausstellen kann.

Dieses Problem besteht dann nicht, wenn die Anschlagfläche des Anschlagsteges nach außen und die ihr zugeordnete Umfangsfläche des Kammelements nach innen gewölbt ist. Bei dieser Ausgestaltung eines erfindungsgemäßen Klemmschlosses ist es ohne zusätzlichen Gestaltungsaufwand ohne weiteres möglich, das Spannmittel so zu führen, dass die Wirklinie der vom Klemmschloss aufgenommen Zugkräfte entsprechend dem Verlauf des an das Klemmschloss herangeführten Spannmittels ausgerichtet ist.

Eine weitere besonders vorteilhafte Variante eines erfindungsgemäßen Klemmschlosses ist dadurch gekennzeichnet, dass an das Kammelement ein Stützabschnitt angeformt ist, der das Kammelement, wenn es gegen den Anschlagsteg geschwenkt ist, gegen den Anschlagsteg abstützt. Dieser Stützabschnitt kann einerseits dazu genutzt werden, das durch den Klemmschlitz geführte Spannmittel so umzulenken, dass ein für seine Klemmung optimaler Verlauf sichergestellt ist. Anderseits ist es mit ihm möglich, die im Klemmschlitz herrschende Klemmkraft so einzustellen, dass das Material des Spannmittels durch die Klemmung nicht geschädigt, gleichzeitig jedoch ein den jeweiligen Anforderungen sicher gerecht werdender Halt gesichert ist. Die Wirkung des Stützabschnitts kann dabei zusätzlich dadurch verbessert werden, dass der Stützabschnitt eine Stützfläche aufweist, mit der er bei gegen den Anschlagsteg geschwenkter Stellung des Kammelements gegen den Anschlagsteg wirkt. Dabei erweist es sich hinsichtlich der Gestaltungsmöglichkeiten als besonders vorteilhaft, wenn der Stützabschnitt als Vorsprung ausgebildet ist. In diesem Fall kann nämlich die Stützfläche des Stützabschnitts zwischen dessen freier Stirnfläche und der der Anschlagfläche des Anschlagsteges zugeordneten Umfangsfläche des Kammelements ausgebildet sein.

Eine möglichst geringe Materialbelastung des Spannmittels bei gleichzeitig besonders einfacher Handhabung und sicherer Funktion eines erfindungsgemäßen Klemmschlosses ergibt sich, wenn sich bei gegen den Anschlagsteg geschwenktem Klemmelement in Einführrichtung des Spannmittels betrachtet die lichte Weite des Klemmschlitzes ausgehend von dessen Eintrittsöffnung in Richtung der Austrittsöffnung erweitert.

Grundsätzlich ist es für die Funktion eines erfindungsgemäßen Klemmschlosses ausreichend, wenn die Materialpaarung "Umfangsflächenabschnitt des Kammelements" / "Spannmittel" so beschaffen ist, dass das Kammelement aufgrund der von dem Spannmittel im gespannten Zustand ausgeübten Kräfte in Richtung des Klemmschlitzes bewegt wird. Besonders sicher lässt sich dies dadurch erreichen, wenn an dem Umfangsflächenabschnitt des Kammelements mindestens ein Rastvorsprung ausgebildet ist, der dazu bestimmt ist, sich im praktischen Einsatz nach Art eines Widerhakens mit dem durch den Klemmschlitz geführten Spannmittel zu verhaken. Die Sicherheit der in diesem Fall mindestens formschlüssigen Verkopplung von Kammelement und Spannmittel kann zudem dadurch erhöht werden, wenn der Rastvorsprung des Umfangsflächenabschnitts des Kammelements sich über die Breite des Klemmschlitzes erstreckt. Erforderlichenfalls können dabei an dem Umfangsflächenabschnitt des Kammelements mehr als ein Rastvorsprung ausgebildet sein, um die Sicherheit der Verkopplung von Spannmittel und Kammelement weiter zu erhöhen. Unter Berücksichtigung der jeweiligen Formgebung der Anschlagfläche bzw. der mit dem Spannmittel in Kontakt kommenden Umfangsfläche kann es in diesem Fall zweckmäßig sein, wenn der Abstand der Rastvorsprünge in Einführrichtung betrachtet ausgehend von der Eintrittsöffnung in Richtung der Austrittsöffnung des Klemmschlitzes abnimmt. Dies gilt insbesondere dann, wenn die Wölbung der Umfangsfläche keinen regelmäßigen Verlauf aufweist.

Wie in der voranstehend beschriebenen Weise für den Umfangsflächenabschnitt des Kammelements beschrieben, kann auch an der dem Umfangsflächenabschnitt zugeordneten Anschlagfläche des Anschlagsteges mindestens ein Rastvorsprung ausgebildet sein, um die Sicherheit, mit dem das Spannmittel im gespannten Zustand in dem Klemmschlitz gehalten ist, zusätzlich zu erhöhen. Zu diesem Zweck kann es vorteilhaft sein, wenn der mindestens eine Rastvorsprung der Abschlagfläche des Anschlagsteges entgegen dem mindestens einen Rastvorsprung des Umfangsflächenabschnitts des Kammelements gerichtet ist.

Um ein zu weites Schwenken des Kammelements auf der Schwenkachse des Gehäuses eines erfindungsgemäßen Klemmschlosses zu verhindern, kann an der Schwenkachse ein Anschlag ausgebildet sein, der den Schwenkweg des Kammelements auf der Schwenkachse begrenzt.

Das Lösen des Kammelements aus seiner Klemmstellung kann auf einfache Weise dadurch vereinfacht werden, dass ein erfindungsgemäßes Klemmschloss ein selbstständig schwenkbeweglich gelagertes Hebelelement aufweist, das das Kammelement bei Ausüben einer auf das Hebelelement ausgeübten Betätigungskraft aus der Klemmstellung, bei der es gegen den Anschlagsteg wirkt, in eine von dem Anschlagsteg weggeschwenkte Lösestellung schwenkt. Ein solches Hebelelement kann dabei in dem Gehäuse eines erfindungsgemäß gestalteten Klemmschlosses problemlos so schwenkbar und mit dem Kammelement verkoppelt angeordnet werden, dass es unter Ausnutzung der Hebelgesetze die beispielsweise manuell aufgebrachte Lösekraft unterstützt. Zu diesem Zweck kann an dem Gehäuse ein Lager zum schwenkbeweglichen Lagern des Hebelelements ausgebildet sein. Dieses Lager kann beispielsweise in Form einer dem Hebelelement zugeordneten, fest und vergleichbar mit der Schwenkachse des Kammelements einstückig mit dem Gehäusekörper verbundenes Formelement oder in Form von zwei gegenüberliegend zueinander angeordneten Aufnahmen für seitlich von dem Hebelelement abstehende Zapfen ausgebildet sein.

Mit der Erfindung steht somit eine sichere und einfach handhabbare sowie kostengünstig herstellbare Möglichkeit zur Verfügung, zwei Enden von einem eine Schlaufe bildenden Spannmittel oder zwei getrennten Spannmitteln miteinander zu verbinden. Das jeweilige Spannmittel lässt sich bei Verwendung eines erfindungsgemäßen Klemmschlosses durch Handkraft problemlos festziehen, da die innerhalb des Klemmschlosses während des Spannvorgangs zu überwindenden Kräfte auf ein Minimum reduziert sind. Genauso lässt sich die erfindungsgemäße Klemmschlosseinrichtung durch eine einfache manuelle Betätigung wieder lösen.

Die aufgebrachte Spannung wird bei einem erfindungsgemäßen Klemmschloss durch einen durch Kammelement und Anschlagsteg gebildeten Rückhaltemechanismus nach dem Spannen selbsttätig und unverzüglich gehalten. Der Rückhaltemechanismus eines erfindungsgemäßen Klemmschlosses kann dabei ein Mehrfaches der Spannung sichern, unter der das jeweilige Spannmittel steht.

So lässt sich das erfindungsgemäße Klemmschloss ohne weiteres so auslegen, dass es eine der jeweils auf ihm lastenden Kräften sicher standhaltende Festigkeit und Steifigkeit besitzt. Auch kann für ein erfindungsgemäßes Klemmschloss ohne besonderen Gestaltungsaufwand ohne weiteres gewährleistet werden, dass seine Bruchfestigkeit mindestens doppelt so hoch ist wie die auf das Klemmschloss maximal einwirkende Nutzlast.

Die beim Stand der Technik bestehenden Nachteile, wie die Notwendigkeit, eine gewisse Vorspannung des jeweiligen Kammelements zu überwinden, um das Spannmittel überhaupt durch den Klemmschlitz führen zu können, die Gefahr einer Beschädigung des Spannmittels durch überhöhte Reibung im Bereich des Klemmschlitzes, Ermüdung der zum Vorspannen des Kammelements benötigten Federelemente, umständliche Handhabung, Bruch des in der Regel separat montierten, die Schwenkachse des Kammelements bildenden Bolzens in Folge der hohen Belastung, sind bei einem erfindungsgemäßen Klemmschloss ausgeräumt. Dabei eignet sich ein erfindungsgemäßes Klemmschloss insbesondere durch die Möglichkeit, das Gehäuse als separates Bauteil mit dem Anschlagsteg, der Schwenkachse für das Spannelement und erforderlichenfalls mit dem Befestigungsabschnitt fertig vorzufertigen, zur kostengünstigen Serienfertigung.

Insbesondere ermöglicht die als eine vorteilhafte Ausgestaltung der Erfindung vorgesehene Kombination aus fester Kerneinlage und die Kerneinlage umhüllendem Kunststoffmantel nicht nur eine größtmögliche Gestaltungsfreiheit im Hinblick auf Ergonomie und Gebrauchseigenschaften des erfindungsgemäßen Klemmschlosses, sondern diese Materialkombination erlaubt es auch, die gegebenenfalls vorgesehene Verstärkungseinlage des Gehäuses aus einem kostengünstigen, ggf. rostempfindlichen Blechmaterial zu fertigen und dieses so in den Kunststoffmantel einzubetten, dass der Kern über die gesamte Lebensdauer des Klemmschlosses sicher gegen Korrosion geschützt ist.

Die Montage eines erfindungsgemäßen Klemmschlosses ist denkbar einfach. So lassen sich die im fertig montierten Zustand schwenkbeweglichen Einzelteile und ihre im Gehäuse des Klemmschlosses vorgesehenen Lagerstellen problemlos so ausbilden, dass sie nach Art von Schnapp- oder Klemmverbindungen ohne zusätzliches aufwändiges Werkzeug miteinander bei der Montage verkoppelt werden können.

Nachfolgend wird die Erfindung anhand einer Ausführungsbeispiele darstellenden Zeichnung näher erläutert. Es zeigen jeweils schematisch:
- Fig. 1: eine erste Variante eines Klemmschlosses in geöffneter Stellung in einem Längsschnitt;
- Fig. 2: das in Fig. 1 gezeigte Klemmschloss in Klemmstellung;
- Fig. 3: das Gehäuse des in den Figuren 1 und 2 gezeigten Klemmschlosses in einer perspektivischen Ansicht;

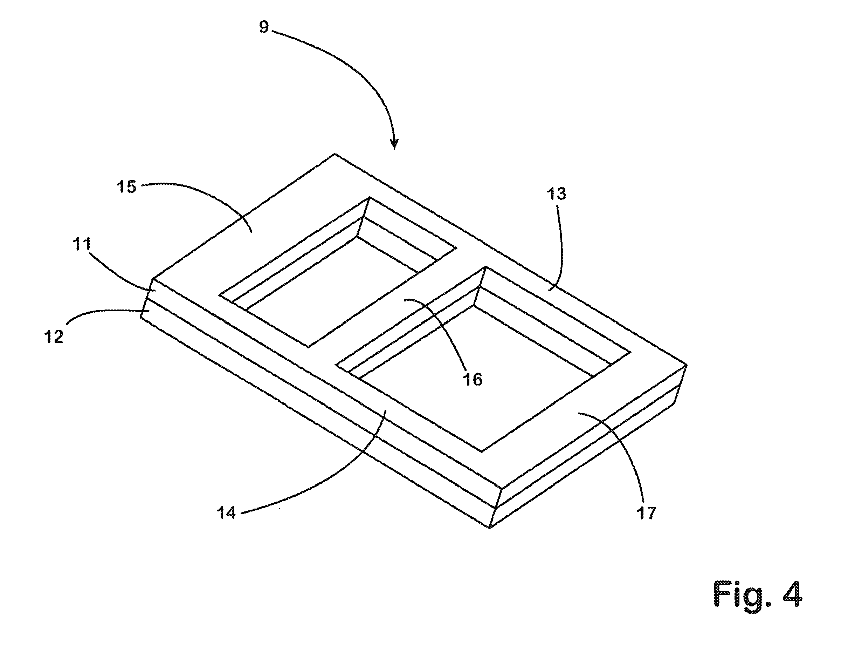

- Fig. 4: eine für das in Fig. 3 gezeigte Gehäuse geeignete Verstärkungseinlage in einer perspektivischen Ansicht;
- Fig. 5a: eine zweite Variante eines Klemmschlosses in einer perspektivischen Darstellung;
- Fig. 5b: das Klemmschloss gemäß Fig. 5a in einer perspektivischen Explosionsdarstellung;
- Fig. 6: das Klemmschloss gemäß Fig. 5a in einem Längsschnitt;

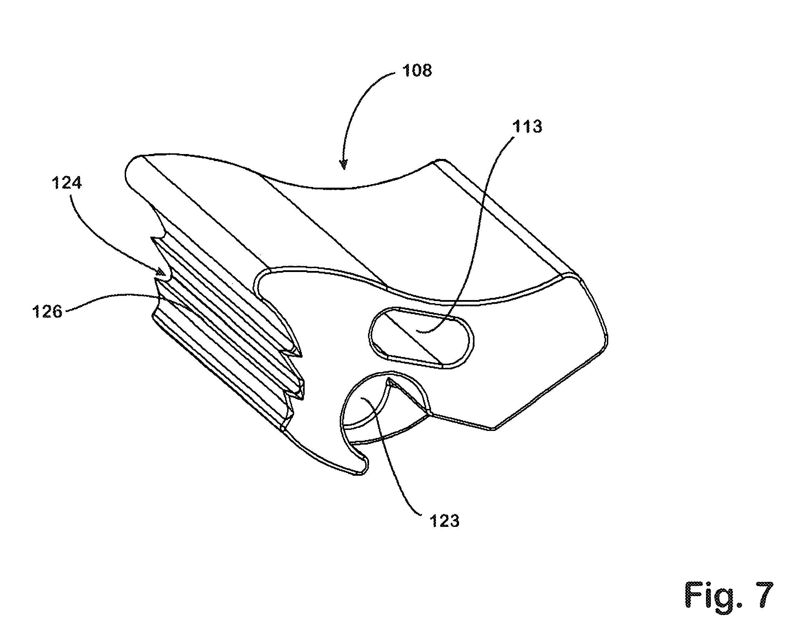

- Fig. 7: ein in dem in den Figuren 5a bis 6 gezeigten Klemmschloss eingesetztes Kammelement in perspektivischer Ansicht;
- Fig. 8: eine in dem in den Figuren 5a bis 7 gezeigten Klemmschloss eingesetzte Verstärkungseinlage in einer perspektivischen Ansicht.

Das Klemmschloss 1 umfasst ein als einheitlicher Körper vorgefertigtes Gehäuse 2. Das Gehäuse 2 ist dabei durch zwei gegenüberliegend zueinander positionierte Wangenteile 3,4, einen sich an deren einen Ende zwischen den Wangenteilen 3,4 erstreckenden Anschlagsteg 5, einen sich an deren anderen Ende zwischen den Wangenteilen 3,4 erstreckenden stegartigen Befestigungsabschnitt 6 und eine zwischen dem Anschlagsteg 5 und dem Befestigungsabschnitt 6 angeordnete, sich ebenfalls zwischen den Wangenteilen 3,4 erstreckende Schwenkachse 7 für ein Kammelement 8 gebildet. Sämtliche Formteile (Wangenteile 3,4, Anschlagsteg 5, Befestigungsabschnitt 6, Schwenkachse 7) des Gehäuses 2 bilden gemeinsam einen einstückig fest und unlösbar miteinander verbundenen Körper.

Dabei ist das Gehäuse 2 durch eine Verstärkungseinlage 9 verstärkt, die in einen die äußere Form aller Formelemente des Gehäuses 2 bestimmenden Kunststoffmantel 10 eingegossen ist. Die Verstärkungseinlage 9 ist nach Art eines Rahmens gestaltet und aus zwei identischen, flächig aufeinander liegenden Stanzteilen 11,12 zusammengesetzt, die aus einem kostengünstigen, rostempfindlichen, jedoch ausreichend festem Stahl vorgefertigt sind. Sie weist zwei jeweils einem der Wangenteile 3,4 zugeordnete Längsstege 13,14, einen ersten sich zwischen den einen einander zugeordneten Enden der Längsstege 13,14 erstreckenden stegartigen Abschnitt 15, der den Anschlagsteg 5 verstärkt, einen sich zwischen den anderen Enden der Längsstege 13,14 erstreckenden, den Befestigungsabschnitt 6 verstärkenden zweiten stegförmigen Abschnitt 16 und einen zwischen dem ersten Abschnitt 15 und dem zweiten Abschnitt 16 der Verstärkungseinlage 9 angeordneten, sich ebenfalls zwischen den Längsstegen 13,14 erstreckenden Abschnitt 17 auf, der die Schwenkachse 7 verstärkt.

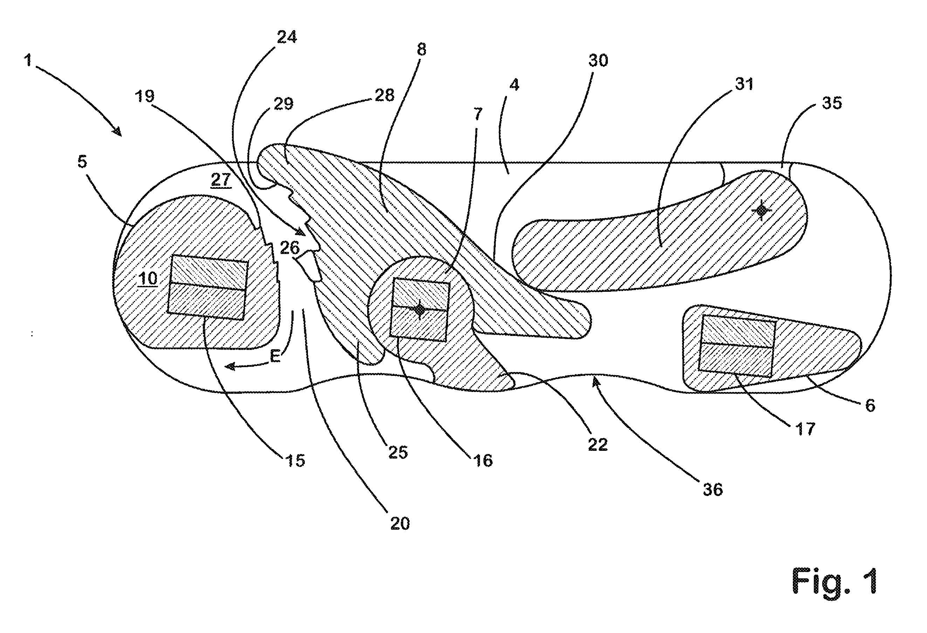

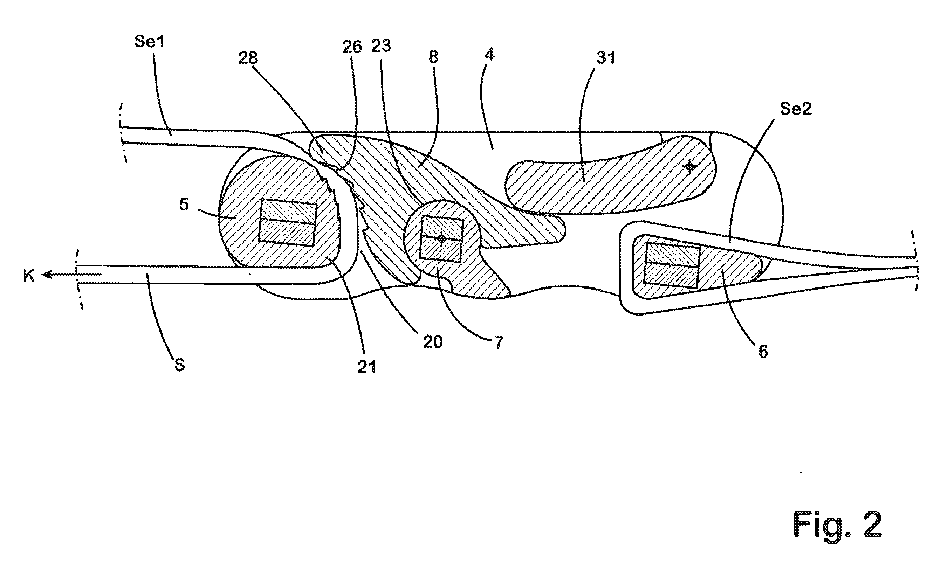

Der Anschlagsteg 5 weist auf seiner der Schwenkachse 7 zugeordneten Seite eine Anschlagfläche 18 auf, die sich über die gesamte Breite B des Anschlagstegs 5 erstreckt und im Querschnitt (Fig. 1,2) gesehen konvex nach außen gewölbt ist. In die Anschlagfläche 18 sind Rastvorsprünge 19 eingeformt, die in regelmäßigen Abständen verteilt über den Umfang der Anschlagfläche 18 verteilt angeordnet sind. Die frei vorstehenden Kanten der Rastvorsprünge 19 sind dabei in Einführrichtung E ausgerichtet, in der ein in dem Klemmschloss 1 zu verspannendes Spannmittel S in den Klemmschlitz 20 eingeführt wird, dessen eine Längsseite durch die Anschlagfläche 18 des Anschlagsteges 5 begrenzt wird. In Einführrichtung E an die Anschlagfläche 18 angeschlossen ist eine ebenfalls nach außen gewölbte Fläche, über die das durch den Klemmschlitz 20 geführte lose Ende SE1 des jeweiligen Spannmittels S knickfrei weggeführt werden kann. In Einführrichtung E vor der Anschlagfläche 18 ist an dem Anschlagsteg 5 dagegen eine abgerundete Kante 21 ausgebildet. Die sich an dieser Kante 21 treffenden eben ausgebildeten Flächen sind im Wesentlichen rechtwinklig zueinander ausgerichtet, so dass das Spannmittel S vor seinem Eintritt in den Klemmschlitz 20 in einem definierten, faltenfreien Verlauf über die Kante 21 in den Klemmschlitz 20 geleitet wird.

Der Befestigungsabschnitt 6 ist im Querschnitt keilförmig ausgebildet, wobei die dünnere Spitze zu dem vom Anschlagsteg 5 abgewendeten Ende des Gehäuses 2 gerichtet ist. Ein um den Befestigungsabschnitt 6 zu einer Schlaufe gelegtes Ende SE2 des Spannmittels S ist auf diese Weise so geführt, dass die im Bereich dieses Endes SE2 auftretenden Materialbelastungen gering sind.

An die im Querschnitt grundsätzlich kreisrunde Schwenkachse 7 des Gehäuses ist in einem Winkel von 45° in Richtung der Unterseite U des Gehäuses 2 von dem Anschlagsteg 5 wegweisend ein Anschlag 22 angeformt, der den Schwenkweg eines auf der Schwenkachse 7 schwenkbar gelagerten Kammelements 8 so begrenzt, dass der Klemmschlitz 20 nur bis zu einer bestimmten maximalen Schwenkstellung geöffnet werden kann (Fig. 1).

Das aus einem hochbelastbaren Kunststoff hergestellte Kammelement 8 weist eine im Wesentlichen dreieckige Grundform auf. In die der Schwenkachse 7 zugeordnete Seite des Kammelements 8 ist eine Lageröffnung 23 eingeformt. Diese ist im Querschnitt ebenfalls grundsätzlich kreisrund mit einem dem Außenradius der Schwenkachse 7 entsprechenden Innenradius ausgebildet und umgreift mit ihren Innenflächen einen Winkel, der größer ist als 180°. Der zwischen der Lageröffnung 23 und der vorderen, der Anschlagfläche 18 des Anschlagstegs 5 zugeordneten Umfangsfläche 24 des Kammelements 8 verbleibende Vorsprung 25 ist aufgrund seiner verminderten Dicke so elastisch nachgiebig, dass das Kammelement 8 unter leichtem Aufspreizen der Lageröffnung 23 nach Art einer Klipp-Verbindung auf die Schwenkachse 7 aufgesetzt und anschließend dort spielfrei schwenkbar gelagert ist.

Die der Anschlagfläche 18 zugeordnete Umfangsfläche 24 des Kammelements 8 ist entgegengesetzt zur Anschlagfläche 18 nach innen gewölbt geformt. Dabei sind in die Anschlagfläche 18 Rastvorsprünge 26 eingeformt, die sich parallel zu den Rastvorsprüngen 19 der Anschlagfläche 18 erstrecken. Die freien Kanten der Rastvorsprünge 26 sind in Einführrichtung E in den Klemmschlitz 20 gerichtet.

An den oberen dem Austritt 27 des Klemmschlitzes 20 zugeordneten Rand der Umfangsfläche 24 ist ein nach Art eines Vorsprung ausgebildeter Stützabschnitt 28 angeformt, der sich über die Breite B des Klemmschlitzes 20 erstreckt und gegenüber der Umfangsfläche 24 in Richtung des Anschlagsteges 5 vorsteht. Der Stützabschnitt 28 ist dabei so geformt und ausgerichtet, dass er bei an den Anschlagsteg angeschwenktem Kammelement 8 mit seiner an die Umfangsfläche 24 angrenzenden Stützfläche 29 gegen den Anschlagsteg 5 wirkt.

In die von der Schwenkachse 7 abgewandte Oberseite des Kammelements 8 ist eine muldenartige Vertiefung 30 eingeformt. In dieser Vertiefung 30 liegt das freie Ende eines im Querschnitt langgestreckt ausgebildeten, sich über die Breite B des Klemmschlitzes 20 erstreckenden Hebelelements 31. Mit seinem anderen Ende ist das Hebelelement 31 schwenkbar in dem Gehäuse 2 gelagert. Zu diesem Zweck sind an dem betreffenden Ende seitlich vorstehende Zapfen 32,33 angeformt, die in entsprechenden, in die Wangen 3,4 eingeformten Aufnahmen 34,35 unverlierbar drehbeweglich gehalten sind.

Um das Halten des Klemmschlosses 1 in der Hand zusätzlich zu vereinfachen, sind von der Unterseite U her in die Wangen 3,4 Griffmulden 36 eingeformt.

Zum Spannen des zu einer Schlaufe gelegten beispielsweise als Gurt vorliegenden Spannmittels S, dessen eines Ende SE2 in der voranstehend bereits beschriebenen Weise um den Befestigungsabschnitt 6 gelegt ist, wird zunächst durch manuelle Druckbetätigung auf das Hebelelement 31 von der Oberseite O des Gehäuses 2 her das Kammelement 8 verschwenkt, bis der Anschlag 22 der Schwenkachse 7 erreicht ist.

Das freie Ende SE1 des Spannmittels S kann nun ungehindert durch den Klemmschlitz 20 geführt werden. Dabei ist die maximale Weite des Klemmschlitzes 20 so bemessen, dass zwischen den Rastvorsprüngen 26 der Umfangsfläche 24 des Kammelements 8 und der ihr zugeordneten Seite des Spannmittels S jeweils noch ein leichter Kontakt besteht.

Das lose Ende SE1 des Spannmittels S wird nun manuell soweit durch den Klemmschlitz 20 gezogen, bis in dem Spannmittel S die geforderte Zugspannung aufgebaut ist. Anschließend wird die auf das Ende SE1 wirkende Spannkraft K gelöst. Dies hat eine nur sehr kurze Rückbewegung des Spannmittels S zur Folge. Im Zuge dieser Rückbewegung greifen jedoch die Rastvorsprünge 26 des Kammelements 8 formschlüssig in das an der Umfangsfläche 24 des Kammelements 8 anliegende Spannmittel S, so dass das Kammelement 8 gegen die Anschlagfläche 18 des Anschlagsteges 5 gedrückt wird. Spätestens jetzt greifen auch die Rastvorsprünge 19 des Anschlagsteges 5 in das Spannmittel S, so dass auch im Bereich der Anschlagfläche 18 des Anschlagstegs 5 eine formschlüssige Verbindung zwischen Klemmschloss 1 und Spannmittel S hergestellt ist.

Bei auf das an dem Anschlagsteg 5 anliegenden Spannmittel S drückender Stellung des Kammelements 8 ist der Klemmschlitz 20 derart geformt, dass er sich ausgehend von seinem Eintritt in Richtung seines Austritts 27 im Querschnitt gesehen verengt. Die im Klemmschlitz 20 herrschende Klemmkraft wird dabei dadurch begrenzt, dass der Stützabschnitt 28 über seine Stützfläche 29 und zwischen Stützabschnitt 28 und Anschlagsteg 5 liegende Spannmitte S gegen den Anschlagsteg 5 abgestützt ist. Wirken im Spannmittel S zu hohe Zugkräfte, wird die im Klemmschlitz 20 herrschende Klemmung überwunden und das Spannmittel S beginnt, aus dem Klemmschlitz 20 herauszugleiten. Auf diese Weise wird eine Überlastung des Klemmschlosses 1 sicher vermieden.

Zum gezielten Lösen der Klemmung wird das Hebelelement durch leichten Druck gegen das ihm zugeordnete, vorsprungartig vorstehende Ende des Kammelements 8 gedrückt, so dass dieses wieder in seine Öffnungsstellung geschwenkt und das Ende SE1 des Spannmittels S wieder frei durch den Klemmschlitz 20 gezogen werden kann.

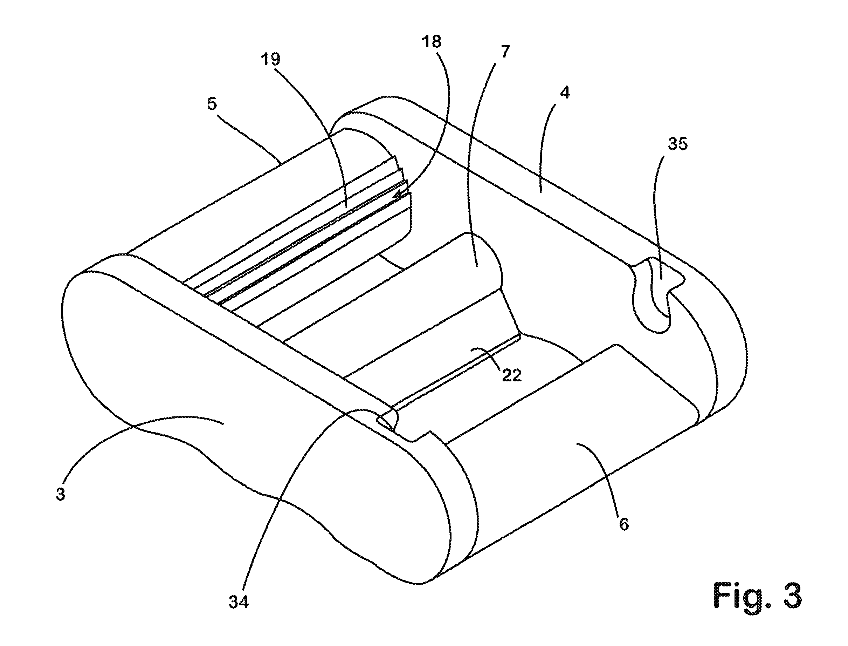

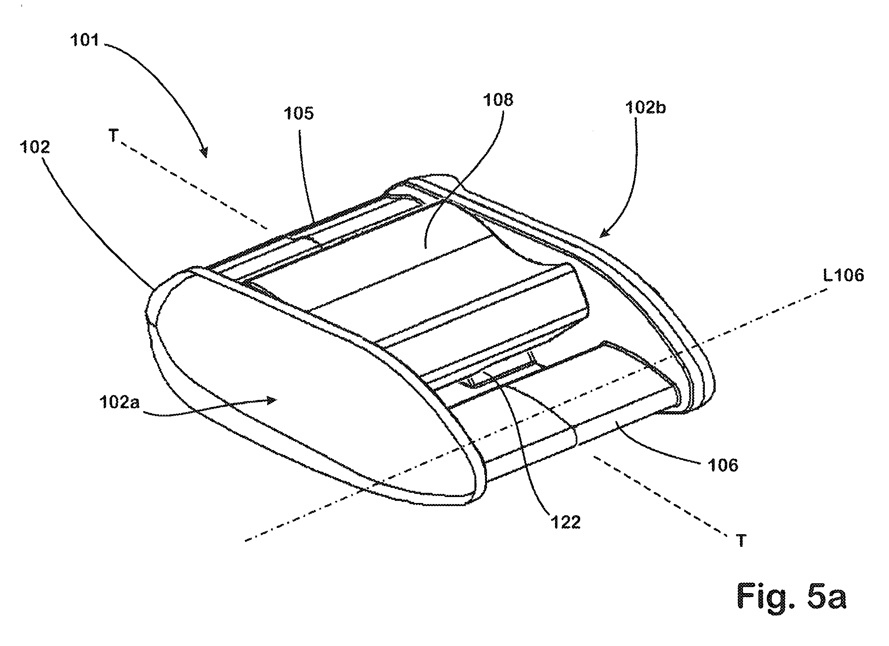

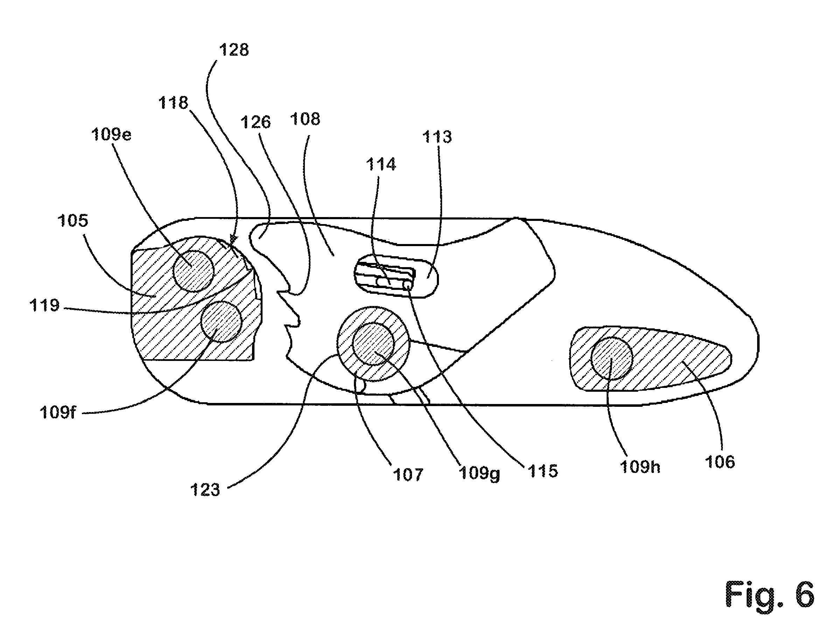

Beim in den Figuren 5a bis 6 gezeigten Klemmschloss 101 ist das Gehäuse 102 aus zwei Gehäuseteilen 102a,102b zusammengesetzt. Das Gehäuse 102 weist dabei zwei gegenüberliegend angeordnete, längliche Wangenteile 103,104 auf, zwischen denen sich ein Anschlagsteg 105, ein Befestigungsabschnitt 106 und eine Schwenkachse 107 erstrecken. Die Positionierung und die Funktion des Anschlagstegs 105, des Befestigungsabschnitts 106 und der Schwenkachse 107 entsprechen dabei grundsätzlich der Positionierung und der Funktion des Anschlagstegs 5, des Befestigungsabschnitts 6 und der Schwenkachse 7 beim in den Figuren 1 bis 3 gezeigten Gehäuse 1.

Die Teilungsebene T des Gehäuses 102 ist in der Mitte zwischen den Wangenteilen 103,104 angeordnet und normal zu den Längsachsen L105, L106, L107 des Anschlagstegs 105, des Befestigungsabschnitts 106 und der Schwenkachse 107 ausgerichtet. Die Teilungsebene T schneidet dementsprechend die betreffenden Längsachsen L105 - L107 jeweils unter einem Winkel von 90°.

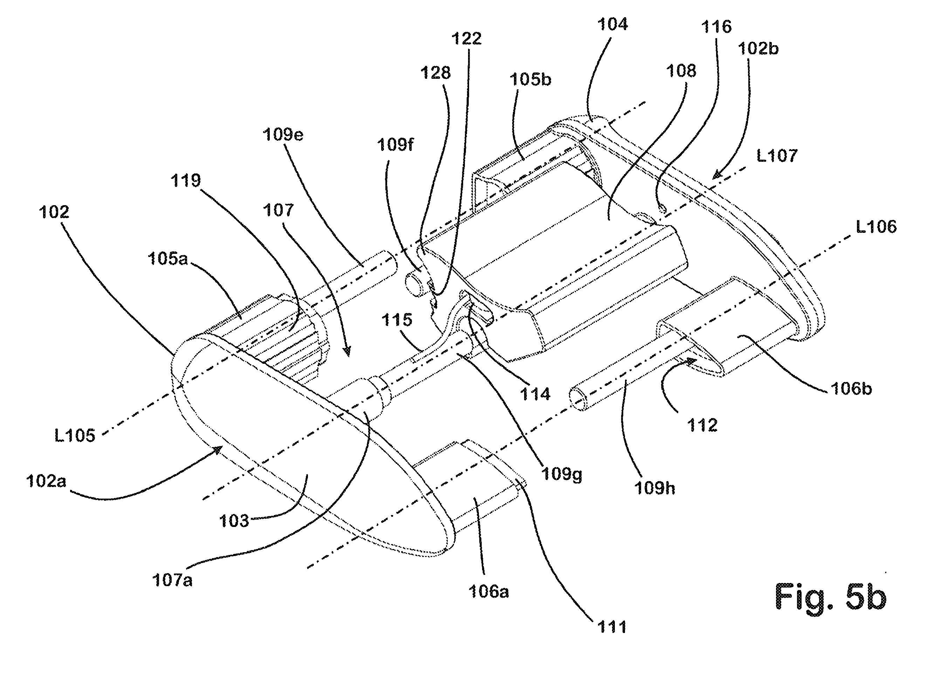

Entsprechend der durch die Teilungsebene T definierten Aufteilung der Gehäuseteile 102a,102b sind der Anschlagsteg 105, der Befestigungsabschnitt 106 und die Schwenkachse 107 jeweils in zwei Hälften geteilt, von denen in Fig. 5 die Hälften 105a,105b des Anschlagstegs 105 und die Hälften 106a,106b des Befestigungsabschnitts 106 sowie die dem Gehäuseteil 102a zugeordnete Hälfte 107a der Schwenkachse 107 zu sehen sind. Die jeweilige Hälfte des Anschlagstegs 105, des Befestigungsabschnitts 106 und der Schwenkachse 107 sind dabei einstückig mit dem ihnen jeweils zugeordneten Wangenteil 103 bzw. 104 verbunden.

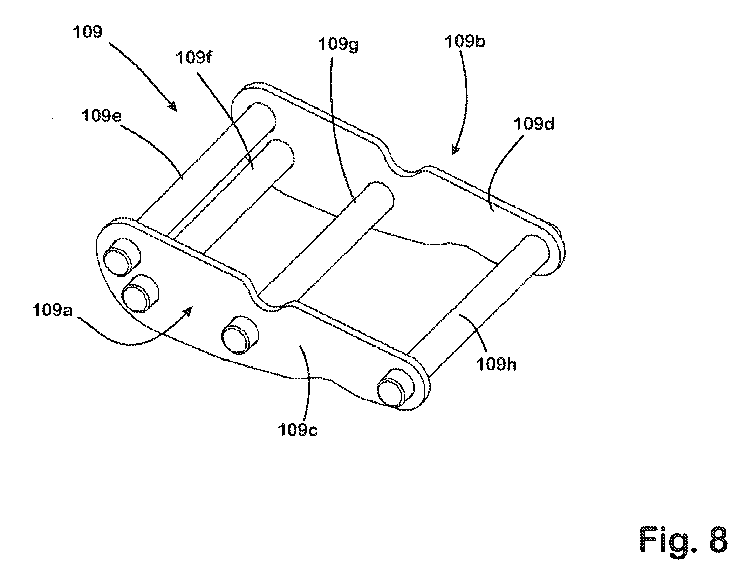

In den Gehäuseteilen 102a,102b liegt jeweils eine Hälfte 109a,109b der in Fig. 8 gezeigten Verstärkungseinlage 109. Die Verstärkungseinlage 109 weist dementsprechend zwei längliche, aus einem Blech ausgestanzte Wangenteile 109c,109d auf, die wie die Wangenteile 103,104 des Gehäuses 102 parallel zueinander angeordnet sind. In den den Bereichen des Anschlagstegs 105, des Befestigungsabschnitts 106 und der Schwenkachse 107 zugeordneten Abschnitten der Verstärkungseinlage 109 erstrecken sich jeweils bolzenartige, aus Metall bestehende und achsparallel zueinander angeordnete Stege 109e,109f,109g,109h, von denen die Stege 109e und 109f dem Anschlagsteg 105, der Steg 109g der Schwenkachse 107 und der Steg 109h dem Befestigungsabschnitt 106 zugeordnet sind.. Die dem Anschlagsteg 106 zugeordneten Stege 109e,109f sind eng benachbart zueinander positioniert, um dem Anschlagsteg 105 eine besonders hohe Stabilität zu verleihen.

Die eine Hälfte 109a der Verstärkungseinlage 109 ist durch das Wangenteil 109c, den Steg 109e des Anschlagstegs 105 und den Steg 109g der Schwenkachse 107 gebildet. Die Stege 109e und 109g sind dabei mit ihren dem Wangenteil 109c zugeordneten Enden nach Art von Vernietungen mit diesem Wangenteil 109c fest und unlösbar verbunden, während ihre dem Wangenteil 109d der anderen Hälfte 109b zugeordneten Enden vor dem Zusammenbau des Gehäuses 102 frei sind.

In entsprechender Weise ist die andere Hälfte 109b der Verstärkungseinlage 109 durch das Wangenteil 109d, den zweiten Steg 109f des Anschlagstegs 105 und den Steg 109h des Befestigungsabschnitts 109h gebildet. Die Stege 109f und 109h sind dabei mit ihren dem Wangenteil 109d zugeordneten Enden nach Art von Vernietungen mit diesem Wangenteil 109d fest und unlösbar verbunden, während ihre dem Wangenteil 109c der anderen Hälfte 109a zugeordneten Enden vor dem Zusammenbau des Gehäuses 102 frei sind.

Die Hälften 109a,109b der Verstärkungseinlage 109 sind jeweils vollständig mit einem Kunststoffmantel 110 umspritzt, durch dessen äußere Form die dargestellte äußere Gestalt der Gehäuseteile 102a,102b bestimmt ist. Die äußere Formgebung des durch das Umspritzen fest und unlösbar mit der Verstärkungslage 109 verbundenen Kunststoffmantels 110 ist dabei jeweils so gewählt, dass sich das Klemmschloss 101 im zusammengebauten Zustand nicht nur gut handhaben lässt, sondern auch keine Verletzungsgefahr besteht. Die dem Gehäuseteil 102a zugeordneten Stege 109e und 109g und die dem Gehäusesteil 102b zugeordneten Stege 109f und 109h der Verstärkungseinlage 109 sind dabei jeweils ausgehend von dem jeweiligen Wangenteil 109c,109d nur bis etwa zur Hälfte vom jeweiligen Kunststoffmantel 110 umgeben. Gleichzeitig sind durch den Kunststoffmantel 110 im Bereich der im vorgefertigten Zustand noch freien, einander jeweils zugeordneten Enden der Hälften 105a,105b des Anschlagstegs 105, der Hälften 106a,106b des Befestigungsabschnitts 106 und der Hälften 108a,107b der Schwenkachse 107 Formelemente, wie Vorsprünge 111 und korrespondierende Ausnehmungen 112 angeformt, über die sich die betreffenden Hälften bei der Montage des Klemmschlosses 102 formschlüssig zusammenführen lassen. Dabei können die Vorsprünge 111 und Ausnehmungen 112 ohne weiteres so ausgebildet sein, dass die Hälften des Anschlagstegs 105, des Befestigungsabschnitts 106 und der Schwenkachse 107 jeweils unlösbar miteinander verrasten.

Gleichzeitig ist in die Hälften 105a des Anschlagstegs 105 eine hier nicht sichtbare, sich achsparallel zum Steg 109e erstreckende Öffnung für den Steg 109f der Verstärkungseinlage 109 eingeformt, der vom Gehäuseteil 102b vorsteht. In entsprechender Weise ist in die Hälfte 106a der Befestigungsachse 106 eine hier ebenfalls nicht sichtbare Öffnung für den ebenfalls von dem Gehäuseteil 102b vorstehenden Steg 109g der Schwenkachse 107 vorgesehen. Genauso sind in die Hälfte 105b des Anschlagsteges 105 und die nicht sichtbare, dem Gehäuseteil 102b zugeordnete Hälfte der Schwenkachse hier ebenfalls nicht dargestellte Öffnungen eingeformt, in die sich die jeweils zugeordneten frei vorstehenden Abschnitte der Stege 109e,109g einschieben lassen.

Um die Verbindung zwischen den Gehäuseteilen 102a,102b dauerhaft zu sichern, werden die Hälften des Anschlagstegs 105, des Befestigungsabschnitts 106 und der Schwenkachse 107 in ihrem Kontaktbereich und im Bereich der Öffnungen, in die die jeweiligen freien Abschnitte der Stege 109e - 109h der Verstärkungseinlage 109 eingeschoben werden, durch Verschweißen oder Verkleben zusätzlich stoffschlüssig verbunden.

Das Kammelement 108 des Klemmschlosses 102 entspricht in seiner Grundform dem Kammelement 8 des in Fig. 1 dargestellten Klemmschlosses 2. Dies betrifft insbesondere sowohl die Formgebung und Anordnung seiner Rastvorsprünge 126 und seines nach Art eines Vorsprungs ausgebildeten Stützabschnitts 128 als auch die Formgebung und Anordnung seiner nach innen gewölbten, mit den Rastvorsprüngen 126 versehenen Umfangsfläche 124. Ebenso sind die nach außengewölbte Anschlagfläche 118 und die darauf vorhandenen Rasten 119 wie die Anschlagfläche 18 und die Rasten 19 ausgebildet.

Im Unterschied zum Kammelement 8 weist das aus Kunststoff bestehende Kammelement 108 jedoch eine Lageröffnung 123 auf, die zwar entsprechend der Lageröffnung 23 des Kammelements 8 angeordnet ist, in ihrem mittleren Abschnitt aber vollständig von Kunststoffmaterial des Kammelements 108 umgeben ist.

An ihren Endabschnitten weist die Lageröffnung jeweils zur Unterseite des Kammelements 108 offene Ausnehmungen auf, in die bei fertig montiertem Klemmschloss 102 an die Innenseite der Wangenteile 103,104 angeformte Anschläge 122 greifen. Die Anschläge 122 begrenzen, wie im Zusammenhang mit dem Kammelement 8 und dem Anschlag 22 beim in Fig. 1 bis 3 dargestellten Klemmschloss 2 bereits erläutert, den Stellweg des Kammelements 108.

Zusätzlich ist in das Kammelement 108 eine Aufnahmetasche 113 eingeformt, die sich zur Oberseite des Kammelements 108 versetzt parallel zur Lageröffnung 123 erstreckt. In der Aufnahmetasche 113 sitzt ein aus Draht geformtes Federelement 114, das bei zusammengebautem Klemmschloss 102 mit seinen freien Enden 115 jeweils in eine in die Innenseiten der Wangenteile 103,104 eingeformte Öffnung 116 greift und nach Art einer Torsionsfeder auf das Kammelement 108 eine federnde Rückstellkraft ausübt, durch die das Kammelement 108 selbsttätig gegen die Anschlagfläche 118 des Anschlagsteges 105 geschwenkt wird.

### BEZUGSZEICHEN

Figuren 1 bis 4
   - 1: Klemmschloss
   - 2: Gehäuse
   - 3,4: Wangenteile des Gehäuses 2
   - 5: Anschlagsteg des Gehäuses 2
   - 6: Befestigungsabschnitt des Gehäuses 2
   - 7: für das Kammelement 8 vorgesehene Schwenkachse des Gehäuses 2
   - 8: Kammelement
   - 9: Verstärkungseinlage
   - 10: Kunststoffmantel des Gehäuses 2
   - 11,12: Stanzteile
   - 13,14: Längsstege der Verstärkungseinlage 9
   - 15,16,17: stegartige Abschnitte der Verstärkungseinlage 9
   - 18: nach außen gewölbte Anschlagfläche des Anschlagstegs 5
   - 19: Rastvorsprünge
   - 20: Klemmschlitz
   - 21: Kante
   - 22: Anschlag
   - 23: Lageröffnung des Kammelements 8
   - 24: nach innen gewölbte Umfangsfläche des Kammelements 8
   - 25: Vorsprung
   - 26: Rastvorsprünge
   - 27: Austritt des Klemmschlitzes
   - 28: Stützabschnitt
   - 29: Stützfläche des Stützabschnitts 28
   - 30: Vertiefung
   - 31: Hebelelement
   - 32,33: Zapfen
   - 34,35: Aufnahmen
   - 36: Griffmulden

   - B: Breite des Klemmschlitzes 20
   - E: Einführrichtung
   - K: Spannkraft
   - S: Spannmittel
   - SE1: loses Ende des Spannmittels S
   - SE2: anderes Ende des Spannmittels S
Figuren 5 - 8
   - 101: Klemmschloss
   - 102: Gehäuse
   - 102a,102b: Gehäuseteile
   - 103,104: Wangenteile
   - 105: Anschlagsteg
   - 105a,105b: Hälften des Anschlagstegs 105
   - 106: Befestigungsabschnitt
   - 106a,106b: Hälften des Befestigungsabschnitts 106
   - 107: Schwenkachse
   - 107a: Hälfte der Schwenkachse 107
   - 108: Kammelement
   - 109: Verstärkungseinlage
   - 109a,109b: Hälften der Verstärkungseinlage 109
   - 109c,109d: Wangenteile der Verstärkungseinlage 109
   - 109e-109h: Stege der Verstärkungseinlage 109
   - 110: Kunststoffmantel
   - 111: Vorsprünge
   - 112: Ausnehmungen
   - 113: Aufnahmetasche
   - 114: Federelement
   - 115: ein freies Ende des Federelements 114
   - 116: Öffnung
   - 118: Anschlagfläche
   - 119: Rasten
   - 122: Anschläge
   - 123: Lageröffnung
   - 124: Umfangsfläche
   - 126: Rastvorsprünge
   - 128: Stützabschnitt des Kammelements 108

   - L105: Längsachse des Anschlagsteges 105
   - L106: Längsachse des Befestigungsstegs 106
   - L107: Längsachse der Schwenkachse 107
   - T: Teilungsebene des Gehäuses 102

## Patentansprüche

1. Klemmschloss für ein Spannmittel (S) mit einem Gehäuse (2;102), das zwei beabstandet zueinander angeordnete Wangenteile (3,4;103,104), einen sich zwischen den Wangenteilen (3,4;103,104) erstreckenden Anschlagsteg (5;105) mit einer Anschlagfläche (18) und eine sich ebenfalls zwischen den Wangenteilen (3,4;103,104) erstreckende Schwenkachse (7;107) umfasst, und mit einem auf der Schwenkachse (7;107) des Gehäuses (2;102) verschwenkbar gelagerten Kammelement (8;108), das einen der Anschlagfläche (18,118) des Anschlagsteges (5,105) zugeordneten Umfangsflächenabschnitt (24) aufweist, der mit der Anschlagfläche (18,118) des Anschlagsteges (5,105) einen Klemmschlitz (20) zum Durchführen des Spannmittels (S) derart begrenzt, dass die im praktischen Einsatz im Spannmittel wirkenden Zugkräfte das Kammelement (8,108) in den Klemmschlitz (20) hineinziehen, **dadurch gekennzeichnet, dass** mindestens im Bereich der Wangenteile (3,4;103,104), des Anschlagsteges (5;105) und der Schwenkachse (7;107) des Gehäuses (2;102) eine Verstärkungseinlage (9;109) vorhanden ist, die von einem Kunststoffmantel (10;110) umgeben ist und aus einem Material besteht, das fester ist als das Material des Kunststoffmantels (10;110) und **dass** an den dem Austritt (27) des Klemmschlitzes (20) zugeordneten Rand des der Anschlagfläche (18,118) des Anschlagsteges (5,105) zugeordneten Umfangsflächenabschnitt (24) des Kammelements (8,108) ein Stützabschnitt (28,128) angeformt ist, der das Kammelement (8,108), wenn es gegen den Anschlagsteg geschwenkt ist, gegen den Anschlagsteg abstützt.

2. Klemmschloss nach Anspruch 1, **dadurch gekennzeichnet, dass** das Gehäuse (2;102) einen Befestigungsabschnitt (6;106) aufweist.

3. Klemmschloss nach Anspruch 2, **dadurch gekennzeichnet, dass** der Befestigungsabschnitt (6;106) stegförmig ausgebildet ist und sich parallel zum Anschlagsteg (5;105) erstreckend ausgebildet ist.

4. Klemmschloss nach einem der Ansprüche 2 oder 3, **dadurch gekennzeichnet, dass** ein Abschnitt (17;109h) der Verstärkungseinlage (9;109) den Befestigungsabschnitt (6;106) verstärkt.

5. Klemmschloss nach einem der voranstehenden Ansprüche, **dadurch gekennzeichnet, dass** der Anschlagsteg (5;105) und die Schwenkachse (7;107) des Kammelements (8;108) des Gehäuses (2;102) in einem Stück geformt sind.

6. Klemmschloss nach einem der voranstehenden Ansprüche, **dadurch**
**gekennzeichnet, dass** in das Kammelement (8) eine Lageröffnung (23) eingeformt ist, die im Querschnitt betrachtet eine einen mehr als 180° betragenden Winkel umgreifende, kreisbogenförmig eingewölbte Innenumfangsfläche aufweist.

7. Klemmschloss nach einem der voranstehenden Ansprüche, **dadurch**
**gekennzeichnet, dass** das Gehäuse (102) aus zwei Gehäuseteilen zusammengesetzt ist und **dass** die Teilungsebene (T) des Gehäuses (102) die Längsachse von Anschlagsteg (105) und Schwenkachse (107) jeweils unter einem Winkel, der größer als 0° ist, schneidet.

8. Klemmschloss nach Anspruch 7, **dadurch**
**gekennzeichnet, dass** die Teilungsebene (T) des Gehäuses (102) in der Mitte des seitlich von den Wangenteilen (103,104) begrenzten Raums verläuft.

9. Klemmschloss nach Anspruch 7 oder 8, **dadurch**
**gekennzeichnet, dass** die Teilungsebene (T) normal zur Längsachse (L105) der Schwenkachse (105), des Anschlagsteges (107) und des Befestigungsabschnitts (106) ausgerichtet ist.

10. Klemmschloss nach einem der Ansprüche 7 bis 9,
**dadurch gekennzeichnet, dass** die Gehäuseteile (102a,102b) miteinander unlösbar verbunden sind.

11. Klemmschloss nach Anspruch 10, **dadurch**
**gekennzeichnet, dass** die Gehäuseteile (102a,102b) stoffschlüssig miteinander verbunden sind.

12. Klemmschloss nach einem der Ansprüche 7 bis 11,
**dadurch gekennzeichnet, dass** die Gehäuseteile (102a,102b) form- und/oder kraftschlüssig miteinander verbunden sind.

13. Klemmschloss nach einem der voranstehenden Ansprüche, **dadurch**
**gekennzeichnet, dass** der Kunststoffmantel (10;110) an die Verstärkungseinlage (9;109) angespritzt ist.

14. Klemmschloss nach einem der voranstehenden Ansprüche, **dadurch**
**gekennzeichnet, dass** die Verstärkungseinlage (9;109) aus Metall besteht.

15. Klemmschloss nach einem der voranstehenden Ansprüche, **dadurch**
**gekennzeichnet, dass** in das Kammelement (108) eine Aufnahme (113) eingeformt ist, in der eine Feder (114) sitzt, die das Kammelement (108) gegen mindestens eines der Wangenteile (103,104) federnd elastisch so abstützt, dass die Feder (114) das Kammelement (108) selbsttätig in Richtung des Anschlagstegs (105) verschwenkt.

16. Klemmschloss nach einem der voranstehenden Ansprüche, **dadurch**
**gekennzeichnet, dass** an der Schwenkachse (7;107) ein Anschlag (22;122) ausgebildet ist, der den Schwenkweg des Kammelements (8;108) auf der Schwenkachse (7;107) begrenzt.

17. Klemmschloss nach einem der voranstehenden Ansprüche, **dadurch**
**gekennzeichnet, dass** es ein selbständig schwenkbeweglich gelagertes Hebelelement (31) aufweist, das das Kammelement (8) bei Ausüben einer auf das Hebelelement (31) gerichteten Betätigungskraft aus einer Klemmstellung, bei der es gegen den Anschlagsteg (5) wirkt, in eine von dem Anschlagsteg (5) weggeschwenkte Lösestellung schwenkt.

## Claims

1. Clamping lock for a tensioning means (S) with a housing (2; 102) which comprises two cheek parts (3, 4; 103, 104) arranged at a distance from each other, a stop web (5; 105) with a stop surface, which stop web extends between the cheek parts (3, 4; 103, 104) and a pivot spindle (7; 107) which likewise extends between the cheek parts (3, 4; 103, 104), and with a comb element (8; 108) pivotably mounted on the pivot spindle (7; 107) of the housing (2; 102), which comb element has a circumferential surface portion (24) associated with the stop surface (18, 118) of the stop web (5, 105), which circumferential surface portion delimits with the stop surface (18, 118) of the stop web (5, 105) a clamping slot (20) for feeding through the tensioning means (S) such that the tensile forces acting in practical use in the tensioning means draw the comb element (8, 108) into the clamping slot (20), **characterised in that** there is a reinforcing insert (9; 109) at least in the region of the cheek parts (3, 4; 103, 104), of the stop web (5; 105) and of the pivot spindle (7; 107) of the housing (2; 102), said reinforcing insert being surrounded by a plastics material casing (10; 110) and being made of a material which is firmer than the material of the plastics material casing (10; 110) and **in that** a support portion (28, 128) is formed on the boundary of the circumferential surface portion (24) of the comb element (8, 108), which boundary is associated with the outlet (27) of the clamping slot (20), and which circumferential surface portion (24) is associated with the stop surface (18, 118) of the stop web (5, 105), and which support portion supports the comb element (8, 108) against the stop web when it is pivoted against the stop web.

2. Clamping lock according to claim 1, **characterised in that** the housing (2; 102) has a fastening portion (6; 106).

3. Clamping lock according to claim 2, **characterised in that** the fastening portion (6; 106) is embodied in a web-like manner and is embodied so as to extend parallel to the stop web (5; 105).

4. Clamping lock according to one of claims 2 or 3, **characterised in that** a portion (17; 109h) of the reinforcing insert (9; 109) reinforces the fastening portion (6; 106).

5. Clamping lock according to any one of the preceding claims, **characterised in that** the stop web (5; 105) and the pivot spindle (7; 107) of the comb element (8; 108) of the housing (2; 102) are shaped in one piece.

6. Clamping lock according to any one of the preceding claims, **characterised in that** a bearing opening (23), which has, viewed in cross section, an inner circumferential surface which encompasses an angle of more than 180° and is arched inward in the shape of an arc of a circle, is formed into the comb element (8).

7. Clamping lock according to any one of the preceding claims, **characterised in that** the housing (102) is composed of two housing parts and **in that** the parting plane (T) of the housing (102) intersects the longitudinal axis of stop web (105) and pivot spindle (107), in each case at an angle which is greater than 0°.

8. Clamping lock according to claim 7, **characterised in that** the parting plane (T) of the housing (102) runs in the centre of the space delimited laterally by the cheek parts (103, 104).

9. Clamping lock according to claim 7 or 8, **characterised in that** the parting plane (T) is oriented normally to the longitudinal axis (L105) of the pivot spindle (105), of the stop web (107) and of the fastening portion (106).

10. Clamping lock according to any one of claims 7 to 9, **characterised in that** the housing parts (102a, 102b) are non-detachably connected to each other.

11. Clamping lock according to claim 10, **characterised in that** the housing parts (102a, 102b) are connected to each other in a material-uniting manner.

12. Clamping lock according to any one of claims 7 to 11, **characterised in that** the housing parts (102a, 102b) are connected to each other in a form-fitting and/or force-transmitting manner.

13. Clamping lock according to any one of the preceding claims, **characterised in that** the plastics material casing (10; 110) is sprayed onto the reinforcing insert (9; 109).

14. Clamping lock according to any one of the preceding claims, **characterised in that** the reinforcing insert (9; 109) consists of metal.

15. Clamping lock according to any one of the preceding claims, **characterised in that** a receptacle (113), containing a spring (114) which resiliently elastically supports the comb element (108) against at least one of the cheek parts (103, 104) in such a way that the spring (114) automatically pivots the comb element (108) in the direction of the stop web (105), is formed in the comb element (108).

16. Clamping lock according to any one of the preceding claims, **characterised in that** a stop (22; 122), which limits the pivoting path of the comb element (8; 108) on the pivot spindle (7; 107), is embodied on the pivot spindle (7; 107).

17. Clamping lock according to any one of the preceding claims, **characterised in that** it has a lever element (31) which is mounted in an independently pivotably movable manner and pivots the comb element (8), on exertion of an actuating force directed onto the lever element (31), from a clamping position, in which it acts against the stop web (5), into a release position pivoted away from the stop web (5).

## Revendications

1. Fermeture à serrage pour une sangle (S) avec un boîtier (2 ; 102), qui comprend deux joues (3, 4 ; 103, 104), disposées à distance l'une de l'autre, une patte de butée (5 ; 105), qui, pourvue d'une surface de butée (18), s'étend entre les joues (3, 4 ; 103, 104), et un axe de pivotement (7 ; 107), qui s'étend également entre les joues (3, 4 ; 103, 104), et avec un élément denté (8 ; 108), qui, monté à pivotement sur l'axe de pivotement (7 ; 107) du boîtier (2 ; 102) et doté d'une section de surface périphérique (24) associée à la surface de butée (18, 118) de la patte de butée (5 ; 105), limite, avec la surface de butée (18, 118) de la patte de butée (5 ; 105), une fente de serrage (20) pour le passage de la sangle (S) de sorte que les forces de traction, qui agissent sur la sangle lors de la mise en pratique, tirent l'élément denté (8 ; 108) dans la fente de serrage (20), **caractérisée en ce que**, au moins dans la zone des joues (3, 4 ; 103, 104), de la patte de butée (5 ; 105) et de l'axe de pivotement (7 ; 107) du boîtier (2 ; 102), est prévu un intercalaire de renforcement (9, 109), qui est entouré d'une gaine en matière synthétique (10, 110) et consiste en une matière plus résistante que la matière synthétique de la gaine (10, 110), et **en ce que**, sur le bord, associé à la sortie (27) de la fente de serrage (20), de la section de surface périphérique (24) de l'élément denté (8 ; 108) associée à la surface de butée (18, 118) de la patte de butée (5 ; 105), est formée une section de support (28, 128), qui soutient l'élément denté (8 ; 108) par rapport à la patte de butée, quand celui-ci est pivoté contre ladite patte de butée.

2. Fermeture à serrage selon la revendication 1, **caractérisée en ce que** le boîtier (2 ; 102) est doté d'une section de fixation (6, 106).

3. Fermeture à serrage selon la revendication 2, **caractérisée en ce que** la section de fixation (6, 106) est réalisée en forme de patte et s'étend parallèlement à la patte de butée (5 ; 105).

4. Fermeture à serrage selon l'une des revendications 2 ou 3, **caractérisée en ce qu'**une section (17 ; 109h) de l'intercalaire de renforcement (9, 109) renforce la section de fixation (6, 106).

5. Fermeture à serrage selon l'une des revendications précédentes, **caractérisée en ce que** la patte de butée (5 ; 105) et l'axe de pivotement (7 ; 107) de l'élément denté (8 ; 108) du boîtier (2 ; 102) sont formés d'une pièce.

6. Fermeture à serrage selon l'une des revendications précédentes, **caractérisée en ce que**, dans l'élément denté (8), est formée une ouverture d'appui (23), qui, vue en coupe transversale, présente une surface périphérique intérieure , courbée es forme d'arc de cercle, qui couvre un angle de plus de 180 °.

7. Fermeture à serrage selon l'une des revendications précédentes, **caractérisée en ce que** le boîtier (102) est composé de deux parties de boîtier et que le plan de division (T) du boîtier (102) coupe l'axe longitudinal de la patte de butée (105) et l'axe de pivotement (107), chacun sous un angle, qui est supérieur à 0 °.

8. Fermeture à serrage selon la revendication 7, **caractérisée en ce que** le plan de division (T) du boîtier (102) s'étend au centre du plan de l'espace latéralement délimité par les joues (103, 104).

9. Fermeture à serrage selon revendication 7 ou 8, **caractérisée en ce que** le plan de division (T) est orienté normalement par rapport à l'axe longitudinal (L105) de l'axe de pivotement (107), de la patte de butée (105) et de la section de fixation (106).

10. Fermeture à serrage selon l'une des revendications 7 à 9, **caractérisée en ce que** les parties de boîtier (102a, 102b) sont reliées inséparablement ensemble.

11. Fermeture à serrage selon la revendication 10, **caractérisée en ce que** les parties de boîtier (102a, 102b) sont reliées ensemble par liaison de matière.

12. Fermeture à serrage selon l'une des revendications 7 à 11, **caractérisée en ce que** les parties de boîtier (102a, 102b) sont reliées ensemble par emboîtement ou par adhérence.

13. Fermeture à serrage selon l'une des revendications précédentes, **caractérisée en ce que** la gaine en matière synthétique (10, 110) est injectée sur l'intercalaire de renforcement (9, 109)

14. Fermeture à serrage selon l'une des revendications précédentes, **caractérisée en ce que** l'intercalaire de renforcement (9, 109) est en métal.

15. Fermeture à serrage selon l'une des revendications précédentes, **caractérisée en ce que**, dans l'élément denté (108), est formé un logement (113), dans lequel est placé un ressort (114), qui contrebute élastiquement l'élément denté (108) contre au moins l'une des joues (103, 104) de sorte que ledit ressort (114) fasse pivoter automatiquement l'élément denté (108) dans la direction de la patte de butée (105).

16. Fermeture à serrage selon l'une des revendications précédentes, **caractérisée en ce que**, sur l'axe de pivotement (7 ; 107), est formée une butée (22 ; 122), qui limite la course de pivotement de l'élément denté (8 ; 108) sur l'axe de pivotement (7 ; 107).

17. Fermeture à serrage selon l'une des revendications précédentes, **caractérisée en ce qu'**elle comprend un élément en forme de levier (31), qui, quand une force d'actionnement est exercée sur l'élément en forme de levier (31), fait pivoter l'élément denté (8) d'une position de serrage, dans laquelle il agit sur la patte de butée (5), à une position de desserrage, distancée de la patte de butée (5).
